# DEMANDE DE BREVET EUROPEEN

(11) **EP 0 970 806 A1**
(43) Date de publication de la demande: **12.01.2000**
(21) Numéro de dépôt: 99401726.7
(22) Date de dépôt: 09.07.1999
(51) Int. Cl.: B32B 7/06, B32B 31/30, B32B 33/00, B65D 53/04, B29D 9/00

(54) **Procédé d'assemblage temporaire d'un premier substrat avec un second substrat**

(30) Priorité: 10.07.1998 LU 90262
(71) Demandeur: LYNES HOLDING S.A., L-2240 Luxembourg (LU)
(72) Inventeur: Wagner, Armand, 4277 Esch/Alzette (LU)
(74) Mandataire: Busnel, Jean-Benoît

(57) **Abrégé**

L'invention concerne un procédé d'assemblage temporaire d'un premier substrat (1) avec un second substrat (2),
caractérisé en ce qu'on charge électrostatiquement un film polymère (12) et/ou le second substrat (2) avec des polarités opposées, on effectue l'extrusion couchage à chaud du film polymère chargé (12), de façon intercalaire entre le premier substrat (1) et le second substrat (2) et on effectue le calandrage de l'ensemble de façon à créer, d'une part, une liaison forte de nature essentiellement chimique entre le premier substrat et le film polymère et, d'autre part, après refroidissement, des liaisons faibles de natures, électrique et mécanique entre le second substrat (2) et le film polymère (12).

## Description

La présente invention concerne un procédé d'assemblage temporaire d'un premier substrat avec un second substrat.

Traditionnellement, l'assemblage de deux substrats est effectué par contre-collage de leur face en regard.

L'adhésion entre les substrats peut-être obtenue notamment par extrusion couchage d'un film polymère intercalaire.

Une étape complémentaire de calandrage vient généralement lisser et laminer l'assemblage définitif.

Une variante de réalisation consiste à appliquer un revêtement spécifique sur chacune des faces en regard des substrats avant ou pendant l'extrusion du film polymère.

La force d'adhésion peut être ajustée soit en appliquant sélectivement un primaire sur l'un des substrats soit en traitant au préalable l'une des surfaces à contre-coller par décharge CORONA.

Cependant, ces méthodes nécessitent, dans le premier cas, l'utilisation de solvants qui sont incompatibles avec des applications notamment alimentaires et imposent dans l'autre cas des pressions de calandrage relativement fortes.

En outre, dans certaines applications le premier substrat est solidaire, par ailleurs, d'un élément amovible tandis que le second substrat doit rester fixe.

Dans ces conditions, on cherche à établir une liaison aisément séparable et donc nécessairement faible et temporaire entre l'un des substrats et le film polymère et une liaison forte entre l'autre substrat et ledit film.

Or, les méthodes précédentes ne permettent pas de contrôler les degrés d'adhérence de part et d'autre du film polymère.

En particulier, ces méthodes ne garantissent pas une tenue suffisante dans le temps de la liaison faible, ce qui entraîne des risques de rupture précoce pendant le stockage.

La présente invention a pour but de répondre à ces objectifs en s'affranchissant des problèmes techniques de l'art antérieur.

Ce but est atteint conformément à l'invention au moyen d'un procédé d'assemblage temporaire d'un premier substrat avec un second substrat,
caractérisé en ce qu'on charge électrostatiquement un film polymère et/ou le second substrat avec des polarités opposées, on effectue l'extrusion couchage à chaud du film polymère chargé, de façon intercalaire entre le premier substrat et le second substrat et on effectue le calandrage de l'ensemble de façon à créer, d'une part, une liaison forte de nature essentiellement chimique entre le premier substrat et le film polymère et, d'autre part, après refroidissement, des liaisons faibles de natures électrique, mécanique et chimique entre le second substrat et le film polymère.

Selon une variante de réalisation, il est prévu de traiter la face interne du premier substrat par décharge CORONA, préalablement à l'extrusion couchage du film polymère.

De préférence, la décharge CORONA est effectuée entre 1000 et 2000 Dyn.

Selon une caractéristique avantageuse, on effectue la charge électrostatique au moyen d'électrodes.

Les charges électrostatiques appliquées sur le film polymère et/ou sur le second substrat sont déterminées au préalable en fonction de l'intensité des forces de liaison faible recherchées. Des charges adaptées à la présente invention sont obtenues notamment au moyen d'un générateur dont la puissance est inférieure à 30 kv.

Selon une autre caractéristique, on réalise le premier substrat et le second substrat avec des revêtements au moins sur les faces destinées à venir en regard du film polymère.

Ces revêtements sont choisis en fonction de la nature des substrats de façon à être compatibles avec ces derniers.

Les substrats et les revêtements seront réalisés avec des complexes plastiques à base de polyéthylène, polypropylène, polyester, PVC ou avec des métaux ou des complexes métalloplastiques ou bien avec du papier ou du carton ou bien encore avec des matières expansées du type mousse à base de polyéthylène ou de polypropylène.

Le film polymère est choisi, quant à lui, parmi le polyéthylène basse densité (PEBD) ou haute densité (PEHD), le polyacrylique (PA), le polystyrène (PS), les copolymères éthylène/acétate de vinyle (EVA).

Selon une variante, le film polymère possède une charge électrostatique intrinsèque de polarité déterminée, établie dès sa fabrication.

Dans ce cas, il est possible de ne procéder qu'à la charge du second substrat avec une polarité opposée à celle du film polymère.

De préférence, ces charges sont sensiblement égales en valeur absolue.

Selon encore une autre caractéristique, l'opération d'extrusion couchage du film polymère est effectuée à une température comprise entre 230°C et 350°C.

De manière avantageuse, le film polymère est constitué d'une ou plusieurs couches d'un matériau choisi parmi le polyéthylène basse ou haute densité (PEBD,PEHD), le polypropylène (PP), le polyéthylène téréphtalate (PET), le polyamide (PA), le polystyrène (PS), un copolymère éthylène/acétate de vinyle (EVA).

Un autre objet de l'invention est une utilisation du procédé décrit ci-dessus pour réaliser un joint de bouchage d'un récipient.

Le procédé de l'invention permet de réaliser un assemblage de deux substrats en une seule étape en contrôlant les degrés d'adhérence entre les composants adjacents.

Ainsi, les forces de liaison sont de niveaux différents entre le premier substrat et le film polymère, d'une part, et le film polymère et le second substrat, d'autre part.

La liaison entre le premier substrat et le film polymère est suffisamment forte pour être définitive ou tout au moins pour résister à des sollicitations normales. La liaison entre le film polymère et le second substrat est quant à elle suffisamment forte pour assurer la cohésion de l'ensemble du produit dans les conditions normales de stockage mais assez faible pour permettre une séparation aisée et non destructrice.

Par ailleurs, l'opération de calandrage est destinée à assurer l'évacuation de la plus grande partie de l'air inclus tandis que les charges électrostatiques opposées maintiennent les faces en regard du film polymère et du second substrat plaquées l'une contre l'autre en évitant toute introduction d'air entre lesdites faces.

Ainsi l'effet de succion lié à la présence d'une dépression générée par le refroidissement à volume interstitiel d'air constant, n'est pas rompu et la séparation des faces en regard ne peut être obtenue par la suite que par un effort de décollement exercé intentionnellement par l'utilisateur.

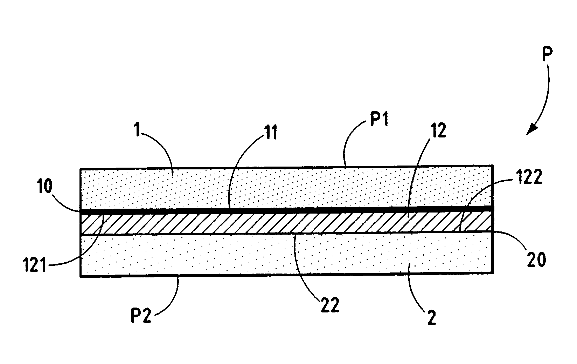

La figure 1 représente une vue de profil schématique d'un mode de réalisation de l'assemblage obtenu avec le procédé de l'invention.

L'élément assemblé représenté sur cette figure est, par exemple un joint de bouchage P, destinée à assurer l'étanchéité et l'inviolabilité entre un couvercle et l'ouverture du col d'un récipient contenant un produit devant être conservé à l'abri de l'air ambiant (non représentés).L'élément P est destiné à être inséré dans le couvercle avec sa face supérieure P1 en regard du fond tandis que le bord périphérique de la face inférieure P2 dudit élément est fixé sur le rebord de l'ouverture du col du récipient à la manière d'un opercule.

L'élément P comprend un premier substrat 1, un second substrat 2 et un film polymère intercalaire 12.

Dans ce mode de réalisation, les substrats ainsi que le film polymère sont éventuellement constitués d'une couche de base pourvue sur au moins l'une de ses faces d'un ou plusieurs revêtement (non représentés).

La face inférieure ou interne 11 du premier substrat est rendue solidaire de la face supérieure 121 du film polymère 12 par des liaisons fortes 10 de nature essentiellement chimique, obtenues par exemple par collage, adhérisation, soudure ou fusion locale.

La face supérieure 22 du second substrat 2 est fixée de façon séparable à la face inférieure 122 du film 12 par des liaisons faibles 20 d'origines mécanique (effet de vide) électrique (charges électrostatiques de signes opposés), et pour une faible part, chimique.

Toute tentative de délaminage de l'élément P conduit donc à séparer uniquement les faces en regard 22,122 du second substrat 2 et du film 12, les faces 11,121 du premier substrat 1 et du film 12 restant solidaires.

En particulier, lors de la première ouverture du récipient, la manoeuvre et le déplacement du couvercle relativement au col du récipient provoque ainsi la séparation des premier et second substrat.

## Revendications

1. Procédé d'assemblage temporaire d'un premier substrat (1) avec un second substrat (2),
caractérisé en ce qu'on charge électrostatiquement un film polymère (12) et/ou le second substrat (2) avec des polarités opposées, on effectue l'extrusion couchage à chaud du film polymère chargé (12), de façon intercalaire entre le premier substrat (1) et le second substrat (2) et on effectue le calandrage de l'ensemble de façon à créer, d'une part, une liaison forte de nature essentiellement chimique entre le premier substrat et le film polymère et, d'autre part, après refroidissement, des liaisons faibles de natures, électrique, mécanique et chimique entre le second substrat (2) et le film polymère (12).

2. Procédé selon la revendication 1, caractérisé en ce que préalablement à l'extrusion couchage du film polymère (12), on traite la face interne (11) du premier substrat (1) par décharge CORONA.

3. Procédé selon la revendication 2, caractérisé en ce que la décharge CORONA est effectuée entre 1000 et 2000 Dyn.

4. Procédé selon l'une des revendications précédentes, caractérisé en ce qu'on effectue la charge électrostatique au moyen d'électrodes.

5. Procédé selon l'une des revendications précédentes, caractérisé en ce qu'on réalise le premier substrat (1) et le second substrat (2) avec des revêtements au moins sur les faces destinées à venir en regard du film polymère (12).

6. Procédé selon l'une des revendications précédentes, caractérisé en ce que le film polymère (12) possède une charge électrostatique intrinsèque de polarité déterminée établie dès sa fabrication.

7. Procédé selon l'une des revendications précédentes, caractérisé en ce que les charges électrostatiques du film polymère (12) et du second substrat (2) sont sensiblement égales en valeur absolue.

8. Procédé selon l'une des revendications précédentes, caractérisé en ce que l'extrusion couchage du film polymère est effectuée à une température comprise entre 230°C et 350°C.

9. Procédé selon l'une des revendications précédentes, caractérisé en ce que le film polymère est constitué d'une ou plusieurs couches d'un matériau choisi parmi le polyéthylène basse ou haute densité (PEBD,PEHD), le polypropylène (PP), le polyéthylène téréphtalate (PET), le polyamide (PA), le polystyrène (PS), un copolymère éthylène/acétate de vinyle (EVA).

10. Utilisation du procédé selon l'une des revendications précédentes pour réaliser un joint de bouchage d'un récipient.
